# EUROPÄISCHE PATENTSCHRIFT

(11) **EP 2 463 854 B1**
(45) Veröffentlichungstag und Bekanntmachung des Hinweises auf die Patenterteilung: **29.05.2013**
(21) Anmeldenummer: 11187645.4
(22) Anmeldetag: 03.11.2011
(51) Int. Cl.: G10K 9/122, G10K 11/00

(54) **Ultraschallsensor mit einer Dämpfungseinrichtung und Verwendung desselben**
Ultrasound sensor with a dampening device and use of same
Capteur à ultrasons doté d'un dispositif d'amortissement et son utilisation

(30) Priorität: 08.12.2010 DE 102010062593
(43) Veröffentlichungstag der Anmeldung: 13.06.2012
(73) Patentinhaber: Robert Bosch GmbH, 70442 Stuttgart (DE)
(72) Erfinder: Klotz, Albrecht, 71229 Leonberg (DE)

(56) Entgegenhaltungen:
- EP-A1- 1 707 122
- WO-A1-2010/011034
- DE-A1- 10 256 553
- DE-A1-102006 038 598
- US-A- 5 560 362
- US-A1- 2004 002 655

## Beschreibung

Die Erfindung bezieht sich auf einen Ultraschallsensor und auf dessen Verwendung nach dem Oberbegriff der unabhängigen Patentansprüche.

### Stand der Technik

Ultraschallsensoren werden unter anderem in der Kraftfahrzeugtechnik dazu verwendet, den Abstand von Kraftfahrzeugen zu Hindernissen in der Kraftfahrzeugumgebung beispielsweise bei Einparkvorgängen zu überwachen und über ein entsprechendes Anzeigemittel optisch bzw. akustisch den Abstand zu einem detektierten Hindernis anzuzeigen. Hierfür sind beispielsweise an der Fahrzeugfront bzw. am Fahrzeugheck Ultraschallsensoren an den Außenbereichen der Fahrzeugkarosserie angeordnet.

Ein zu diesem Zwecke geeigneter Ultraschallsensor ist beispielsweise der DE 103 46 620 A1 zu entnehmen. Dieser umfasst unter anderem eine schwingungsfähige Membran und ein mit dieser in Kontakt stehendes Piezoelement, das die Membran zu Schwingungen im Ultraschallbereich anregt. Um die nötige Energie zur Anregung der Membran durch das Piezoelement in einem Sendemodus des Sensors zu minimieren, wird die Membran im Resonanzbereich betrieben. Das bedeutet, dass das Piezoelement mit einer Frequenz schwingt, die der Resonanzfrequenz der Membran entspricht, um so mit möglichst geringem Energieaufwand eine maximale Amplitude der Membran zu erreichen.

Da die Membran jedoch im Sendemodus bei Betrieb im Resonanzfrequenzbereich nach der Anregung durch das Piezoelement eine gewisse Nachschwingzeit zeigt, kann während dieser Nachschwingphase keine Detektion von Hindernissen in der Fahrzeugumgebung auf der Basis reflektierter Ultraschallwellen erfolgen. Dies bedeutet, dass je nach Nachklingzeit der Membran Hindernisse, die einen Mindestabstand zu dem betreffenden Kraftfahrzeug unterschreiten, nicht mehr detektiert werden können.

Um die Nachschwingphase der Membran reduzieren zu können, ist es bekannt, die Membran des Ultraschallsensors an eine Dämpfungseinrichtung zu koppeln, die zu einem raschen Abklingen der schwingenden Membran führt.

Ein weiteres Problem im Systemverhalten von ultraschallbasierten Parkleitsystemen ergibt sich, wenn ein Kraftfahrzeug zunächst in einer verhältnismäßig warmen Garage geparkt worden ist und nachfolgend beispielsweise ins Freie manövriert wird und dort in Kontakt mit kalter Winterluft kommt. Solange das thermische Gleichgewicht zwischen den Ultraschallsensoren des Fahrzeugs und der Umgebung noch nicht eingestellt ist, tritt zwischen Sensor-Äußerem und Sensor-Innerem ein großer Temperaturgradient auf. Dabei stellen sich beispielsweise die schwingungsanregenden Kompartimente des Ultraschallsensors wie Membran und beispielsweise Piezoelement aufgrund ihrer guten thermischen Anbindung an die Außenumgebung deutlich schneller auf die neue Außentemperatur ein als beispielsweise eine im Inneren des Ultraschallsensors positionierte Dämpfungseinrichtung oder beispielsweise die üblicherweise in Vergussmaterialien eingebettete elektronische Ansteuerung des Ultraschallsensors.

Aufgrund dieser thermischen Effekte kommt es in der Praxis zu einer fluktuierenden Dämpfung bzw. zu einem fluktuierenden Nachschwingen des Ultraschallsensors so lange, bis sich im Inneren des Ultraschallsensors ein thermisches Gleichgewicht eingestellt hat.

Ursache für diese Effekte kann beispielsweise eine temporäre Fehlanpassung zwischen elektrischem und mechanischem Schwingkreis sein Darüber hinaus können mechanische Spannungen zwischen der Membran des Sensors, dem Piezoelement als Schwingungsanreger oder einer zwischen Sensormembran und Piezoelement vorgesehenen Kleberschicht auftreten, die auch zu einer Verschiebung der Resonanzfrequenz führen können oder zu einer Fehlanpassung zwischen Luftschalldämpfung, Dämpfung innerhalb des Sensors und der vorher eingestellten Sensorempfindlichkeit.

Infolge dessen können beispielsweise temporäre Überreichweiten, gegebenenfalls verbunden mit Warnungen vor nicht vorhandenen Hindernissen oder fehlerhafte Ergebnisse einer Sensoreigendiagnose auftreten.

Aus dem Stand der Technik ist in Bezug auf Temperaturwechselprobleme beispielsweise aus der DE 103 47 518 A1 bekannt, elektronische Bauelemente mit einem Wärmespeicher auszurüsten, der beispielsweise ein Phasenwechselmaterial umfassen kann. Eine Anwendung im Bereich akustischer Sensoren ist nicht vorgesehen. Ein Ultraschallsensor mit Phasenwechselmaterial ist aber auch in EP 1 707 122 gezeigt.

### Offenbarung der Erfindung

Aufgabe der vorliegenden Erfindung ist es, einen Ultraschallsensor bereitzustellen, der auch bei raschen Temperaturwechseln eine weitgehend konstante Funktionstüchtigkeit zeigt.

### Vorteile der Erfindung

Die der Erfindung zugrunde liegende Aufgabe wird durch einen Ultraschallsensor mit den kennzeichnenden Merkmalen des Anspruchs 1 gelöst.

Dies beruht im wesentlichen darauf, dass der Ultraschallsensor einen Wärmespeicher umfasst, dessen Wirkung darin besteht, dass bei auftretenden raschen, d. h. sich über wenige oder einige Minuten erstreckenden Temperaturwechseln in der Umgebung des Ultraschallsensors die im Wärmespeicher zuvor gespeicherte thermische Energie an die technischen Baukomponenten des Ultraschallsensors abgegeben wird und somit eine verlangsamte und in Bezug auf die unterschiedlichen Bauteilkomponenten des Ultraschallsensor gleichmäßige Temperaturanpassung an das Temperaturniveau der Außenumgebung des Ultraschallsensors erreicht wird. Auf diese Weise können die sonst üblicherweise unter diesen Bedingungen auftretende Fehlfunktionalitäten eines Ultraschallsensors im wesentlichen vollständig vermieden oder zumindest abgemildert werden.

Weitere vorteilhafte Ausführungsformen der vorliegenden Erfindung sind Gegenstand der Unteransprüche.

So ist es von Vorteil, wenn der Wärmespeicher des Ultraschallsensors ein Phasenwechselmaterial, auch als "phase change material" bezeichnet, aufweist. Unter diesem sind Materialien zu verstehen, die in einem Temperaturbereich einen Phasenwechsel zeigen, in dem der Arbeitsbereich des Wärmespeichers anzusiedeln ist. Aufgrund des Phasenübergangs kann eine relativ hohe Menge an thermischer Energie freigesetzt bzw. absorbiert werden, sobald die Außentemperatur die Phasenwechseltemperatur überschreitet bzw. unterschreitet.

Weiterhin ist vorteilhaft, wenn das Phasenwechselmaterial des Wärmespeichers in Form polymerer Hohlkugeln ausgestaltet ist, in deren Innerem das eigentliche Phasenwechselmaterial gespeichert ist. Die polymeren Hohlkugeln ihrerseits können in einem weiteren Medium wie beispielsweise in einem Polymerschaum dispergiert sein.

Wird beispielsweise ein Dämpfungselement des Ultraschallsensors teilweise oder vollständig als Wärmespeicher ausgeführt, so können beispielsweise die polymeren Hohlkugeln, in deren Innerem das Phasenwechselmaterial gespeichert ist, in der polymeren Schaummatrix des Dämpfungselements dispergiert werden.

Steht nun das Dämpfungselement seinerseits in physischem Kontakt mit dem Schwingungsanreger des Ultraschallsensors bzw. einer Leiterbahnstruktur zur Ansteuerung dieses Schwingungsanregers und/oder zu einem Gehäuseabschnitt des Ultraschallsensors, so können alle wesentlichen Baugruppen des Ultraschallsensors im Falle eines Temperaturwechsels über die als Wärmespeicher fungierende Dämpfungseinrichtung aufgrund der von dem Wärmespeicher freigesetzten bzw. absorbierten thermischen Energie in verlangsamter Weise und somit unter Vermeidung thermischer Spannungen an das neue Temperaturniveau herangeführt werden.

### Kurze Beschreibung der Zeichnung

Ausführungsformen der vorliegenden Erfindung sind in der Zeichnung dargestellt und in der nachfolgenden Beschreibung näher erläutert. Es zeigt:

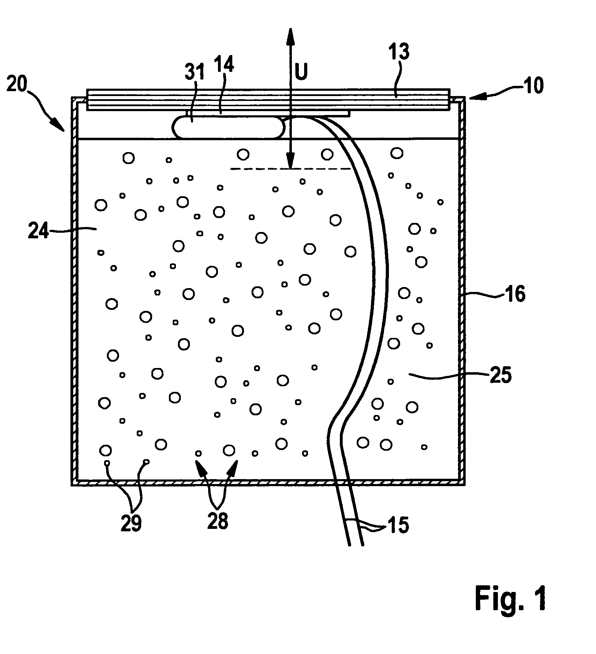

- Figur 1: eine schematische Schnittdarstellung eines Ultraschallsensors gemäß einer ersten Ausführungsform der vorliegenden Erfindung.

### Beschreibung der Ausführungsbeispiele

In Figur 1 ist eine bevorzugte Ausführungsform eines Ultraschallsensors 10 in einer Schnittdarstellung dargestellt. Dieser umfasst eine schwingungsfähige Membran 13, die dem Aussenden akustischer Wellen dient und vorzugsweise zusätzlich auch der Detektion reflektierter akustischer Wellen. Zur Anregung der Membran 13 dient ein Schwingungsanreger 14, der beispielsweise in Form eines Piezoelements ausgeführt sein kann. Der Schwingungsanreger 14 steht dabei in physischem Kontakt mit der Membran 13. Zur Energieversorgung des Schwingungsanregers 14 dienen elektrische Leitungen 15.

Die Membran 13 wird vorzugsweise im Bereich ihrer Resonanzfrequenz betrieben, dieser Schwingungsmodus ist in Figur 1 durch den Doppelpfeil U verdeutlicht. Dabei sendet die Membran 13 vorzugsweise Schallwellen im Ultraschallbereich aus bzw. detektiert diese.

Um ein rasches Umschalten des Ultraschallsensors 10 von einem Sendemodus, in dem Ultraschallwellen an die Sensorumgebung abgegeben werden, auf einen Empfangsmodus, in dem in der Umgebung reflektierte Ultraschallwellen detektiert werden, zu ermöglichen, wird die Schwingung der Membran 13 vorzugsweise über eine Dämpfungseinrichtung 20 gedämpft. In Figur 1 umfasst die Dämpfungseinrichtung 20 einen Dämpfungsblock 25, der auch in direktem Kontakt mit dem Schwingungsanreger 14 bzw. der Membran 13 positioniert sein kann, und der beispielsweise durch einen Polymerschaum gebildet ist.

Gemäß einer alternativen nicht dargestellten Ausführungsform kann die Dämpfungseinrichtung 20 darüber hinaus ein Metallblättchenaufweisen, das beispielsweise mittels einer Kleberschicht in physischem Kontakt mit dem Schwingungsanreger 14 oder alternativ auch mit der Membran 13 steht. Durch die Schwingungen der Membran 13 wird das Metallplättchen zu einer Eigenschwingung angeregt. Das Metallblättchen ist innerhalb des Ultraschallsensors 10 so platziert, dass es zumindest teilweise vom Material des Dämpfungskörpers 25 umgeben ist.

Auf diese Weise wird erreicht, dass die Schwingungen der Membran 13 nach Beendigung der Anregung der Membran 13 durch den Schwingungsanreger 14 aufgrund der Dämpfung durch den Dämpfungsblock 25 rasch abklingt und unmittelbar danach Ultraschallwellen, die auf die Membran 13 treffen, detektierbar sind.

Erfindungsgemäß ist vorgesehen, dass beispielsweise im Bereich des Dämpfungsblocks 25 ein Wärmespeicher vorgesehen ist, der beispielsweise in den Dämpfungsblock 25 integriert ist. Gemäß einer dazu alternativen Ausführungsform, wie sie in Figur 1 dargestellt ist, dient der Dämpfungsblock 25 selbst als Wärmespeicher. In beiden Fällen wird vorzugsweise ein Phasenwechselmaterial als Bestandteil des Wärmespeichers vorgesehen. Dieses hat die Eigenschaft, bei Erwärmung bzw. Abkühlung einen Phasenwechsel zu durchlaufen unter Freisetzung bzw. Aufnahme einer größeren Menge thermischer Energie. Als Phasenwechselmaterialien eignen sich beispielsweise polymere Hohlkugeln, deren Wandung beispielsweise aus Polyacryl gebildet ist und in deren Innerem das Phasenwechselmaterial geschützt vor Umfeldeinflüssen gespeichert ist. Diese polymeren Hohlkugeln 28 können beispielsweise im Dämpfungsmaterial des Dämpfungsblocks 25 dispergiert vorliegen. Dabei können die polymeren Hohlkugeln 28 beispielsweise aus einem Werkstoff ausgeführt werden, wie er als Mikronal ® von der BASF SE bzw. dem Fraunhofer Institut ISE vertrieben wird. Der Phasenübergang dieser polymeren Hohlkugeln lässt sich aufgrund deren Füllung mit einem Parafinwachs in einem Temperaturbereich zwischen 21 und 26°C einstellen.

Die Dispersion der Polymerhohlkugeln 28 im Material des Dämpfungsblocks 25 kann beispielsweise homogen erfolgen. Je höher der Gehalt an polymeren Hohlkugeln 28 am Material des Dämpfungsblocks 25 ist, desto stärker ausgeprägt fällt dessen temperaturausgleichende Wirkung aus.

Gemäß einer alternativen Ausführungsform kann der Zusatz an polymeren Hohlkugeln 28 zum Material des Dämpfungsblocks 25 auch inhomogen erfolgen, wobei beispielsweise Zonen des Dämpfungsblocks 25, die in physischem Kontakt mit sich rasch abkühlendem bzw. erwärmenden Komponenten des Ultraschallsensors 10 in physischem Kontakt stehen, eine höhere Konzentration an polymeren Hohlkugeln 28 aufweisen. Diese kann beispielsweise doppelt bis bspw. viermal so hoch sein wie in anderen Bereichen des Dämpfungsblocks 25.

Da der Dämpfungsblock 25 vorzugsweise neben den polymeren Hohlkugeln 28 zusätzlich Poren 29 aufweist, zeigt dieser über die temperaturausgleichenden Eigenschaften hinaus auch gute thermische bzw. schwingungsabsorbierende Eigenschaften. Zur Ausbildung des porösen Grundmaterials des Dämpfungsblocks 25, in dem die polymeren Hohlkugeln 28 dispergiert sind, eignen sich beispielsweise Silikonschäume wie u.a. Fermasil ® oder Polyurethanschäume.

Weiterhin ist vorteilhaft, wenn noch verbleibender Bauraum des Ultraschallsensors 10 mit einem um ein Latentwärmespeichermaterial angereicherten Füllstoff, wie beispielsweise Bectron ®, ausgefüllt wird. In allen Fällen wird der Volumenanteil, die Partikelform bzw. -größe der entsprechenden Latentwärmespeichermaterialien so gewählt, dass die Dämpfungseigenschaften bzw. die Schaumstruktur des Dämpfungsblocks 25 weitgehend erhalten bleibt, so dass keine negativen Auswirkungen in Bezug auf ein Nachschwingen oder die Langzeitstabilität des Ultraschallsensors 10 auftreten kann.

Da insbesondere die Gehäuseaußenseite 16 des Ultraschallsensors 10 bzw. die Membran 13 und der Schwingungsanreger 14 einer raschen Abkühlung bzw. Erwärmung bei sich verändernder Außentemperatur in Bezug auf den Ultraschallsensor unterworfen sind, steht bevorzugt der Dämpfungsblock 25, der die als Latentwärmespeicher wirkenden polymeren Hohlkugeln 28 umfasst, in physischem Kontakt mit diesen genannten Baugruppen. Darüber hinaus kann der Dämpfungsblock 25 jedoch auch in physischem Kontakt mit einer in Figur 1 nicht dargestellten elektrischen Leiterplatte stehen, die beispielsweise der Spannungsversorgung und Ansteuerung des Schwingungsanregers 14 dient. Diese kann zusätzlich mit einer Vergussmasse vergossen sein.

Die Anwendung der vorliegenden Erfindung ist nicht auf Ultraschallsensoren im Bereich der Kraftfahrzeugtechnik beschränkt. Vielmehr können die erfindungsgemäßen Ultraschallsensoren auch im medizinischen Bereich Anwendung finden als Grundlage der dort üblichen bildgebenden Verfahren und auch bei akustischen Sensoren, die auf der Basis von Schallfrequenzen im Nichtultraschallbereich ausgeführt sind.

## Patentansprüche

1. Ultraschallsensor zur Umfelderfassung bei Kraftfahrzeugen, mit einer schwingungsfähigen Membran, mit einem mit dieser in Kontakt stehenden Schwingungsanreger und mit einer Dämpfungseinrichtung zur Schwingungsdämpfung der Membran, wobei die Dämpfungseinrichtung (20) einen Wärmespeicher umfasst,
**dadurch gekennzeichnet, dass** der Wärmespeicher ein Phasenwechselmaterial enthält, wobei das Phasenwechselmaterial aus polymeren Hohlkugeln (28) gebildet ist, die mit einem Phasenwechselmaterial gefüllt sind.

2. Ultraschallsensor nach Anspruch 1, **dadurch gekennzeichnet, dass** die Dämpfungseinrichtung (20) als Wärmespeicher ausgeführt ist.

3. Ultraschallsensor nach einem der vorhergehenden Ansprüche, **dadurch gekennzeichnet, dass** die Dämpfungseinrichtung (20) in physischem Kontakt mit dem Schwingungsanreger (14) und/oder der Membran (13) steht.

4. Ultraschallsensor nach einem der vorhergehenden Ansprüche, **dadurch gekennzeichnet, dass** die Dämpfungseinrichtung (20) in physischem Kontakt mit einer Leiterplatte zur Ansteuerung des Schwingungsanregers (14) steht.

5. Ultraschallsensor nach einem der vorhergehenden Ansprüche, **dadurch gekennzeichnet, dass** die Dämpfungseinrichtung (20) in physischem Kontakt mit einer Gehäuseinnenwand (16) des Ultraschallsensors (10) steht.

6. Ultraschallsensor nach Anspruch 4, **dadurch gekennzeichnet, dass** die polymeren Hohlkugeln (28) in einem polymeren Schaum dispergiert sind.

7. Verwendung eines Ultraschallsensors nach einem der vorhergehenden Ansprüche in einem Kraftfahrzeug zur Bestimmung eines Abstands des Kraftfahrzeugs zu einem Hindernis.

## Claims

1. Ultrasound sensor for sensing the surroundings in motor vehicles, having an oscillation-capable diaphragm, having an oscillation exciter which is in contact therewith and having a damping device for oscillation damping of the diaphragm, wherein the damping device (20) comprises a heat accumulator, **characterized in that** the heat accumulator contains a phase change material, wherein the phase change material is formed from hollow polymer spheres (28) which are filled with a phase change material.

2. Ultrasound sensor according to Claim 1, **characterized in that** the damping device (20) is embodied as a heat accumulator.

3. Ultrasound sensor according to one of the preceding claims, **characterized in that** the damping device (20) is in physical contact with the oscillation exciter (14) and/or the diaphragm (13).

4. Ultrasound sensor according to one of the preceding claims, **characterized in that** the damping device (20) is in physical contact with a printed circuit board for actuating the oscillation exciter (14).

5. Ultrasound sensor according to one of the preceding claims, **characterized in** the damping device (20) is in physical contact with a housing inner wall (16) of the ultrasound sensor (10).

6. Ultrasound sensor according to Claim 4, **characterized in that** the hollow polymer spheres (28) are dispersed in a polymer foam.

7. Use of an ultrasound sensor according to one of the preceding claims in a motor vehicle for determining a distance from the motor vehicle to an obstacle.

## Revendications

1. Sonde d'ultrasons servant à saisir l'environnement de véhicules automobiles, et présentant une membrane apte à osciller, un vibreur en contact avec cette dernière et un amortisseur qui amortit les vibrations de la membrane, l'amortisseur (20) comportant un accumulateur de chaleur, **caractérisée en ce que**
l'accumulateur de chaleur contient un matériau à changement de phase, le matériau à changement de phase étant formé de billes polymères creuses (28) remplies d'un matériau à changement de phase.

2. Sonde d'ultrasons selon la revendication 1, **caractérisée en ce que** l'amortisseur (20) est configuré comme accumulateur de chaleur.

3. Sonde d'ultrasons selon l'une des revendications précédentes, **caractérisée en ce que** l'amortisseur (20) est en contact physique avec le vibreur (14) et/ou avec la membrane (13).

4. Sonde d'ultrasons selon l'une des revendications précédentes, **caractérisée en ce que** l'amortisseur (20) est en contact physique avec une carte de circuit qui commande le vibreur (14).

5. Sonde d'ultrasons selon l'une des revendications précédentes, **caractérisée en ce que** l'amortisseur (20) est en contact physique avec une paroi intérieure (16) du boîtier du détecteur d'ultrasons (10).

6. Sonde d'ultrasons selon la revendication 4, **caractérisée en ce que** les billes polymères creuses (28) sont dispersées dans une mousse polymère.

7. Utilisation d'un détecteur d'ultrasons selon l'une des revendications précédentes dans un véhicule automobile pour déterminer la distance entre le véhicule automobile et un obstacle.
